# EUROPEAN PATENT APPLICATION

(11) **EP 2 755 407 A1**
(43) Date of publication of application: **16.07.2014**
(21) Application number: 11865147.0
(22) Date of filing: 29.12.2011
(51) Int. Cl.: H04W 4/02, H04L 29/08

(54) **MOBILE BROADBAND DEVICE AND ASSISTED POSITIONING METHOD THEREFOR**

(30) Priority: 17.10.2011 CN 201110314275
(71) Applicant: ZTE Corporation, Shenzhen, Guangdong 518057 (CN)
(72) Inventor: ZHAO, Ming, Shenzhen Guangdong 518057 (CN); ZHANG, Wentao, Shenzhen Guangdong 518057 (CN)
(74) Representative: Ahner, Philippe
(86) International application number: PCT/CN2011/084905
(87) International publication number: WO 2012/152040

(57) **Abstract**

A mobile broadband device and an assisted positioning method therefore are disclosed. A host initiates a positioning request to the mobile broadband device; a firmware of the mobile broadband device determines whether an assisted positioning function is needed for the positioning request received from the host, and when the assisted positioning function is needed, the device software initiates a request for acquiring assisted positioning data to the host; after receiving the request for acquiring the assisted positioning data from a device side, the host initiates the request for acquiring the assisted positioning data to a Secure User Plane Location (SUPL) server; the SUPL server sends positioning data to the host; after receiving the assisted positioning data, the host sends the assisted positioning data to the mobile broadband device; and the firmware of the mobile broadband device calculates standard Global Positioning System (GPS) data using the received assisted positioning data, and then outputs the standard GPS data to a positioning application program of the hose side. The disclosure enhances user experience, saves traffic for a user, increases benefits for the user, greatly reduces the load of the device side, improves the performance index of the product, and expands the application scope for the assisted positioning function.

## Description

### TECHNICAL FIELD

The disclosure relates to the field of communication technologies, and specifically relates to a mobile broadband device and assisted positioning method therefor.

### BACKGROUND

Currently, with the rapid development of 3G communication networks, users not only provides a high requirement to a traditional voice service of a mobile network, but also pays more attention to a wireless data service of the mobile network. Accordingly, the application of a mobile broadband device is also extremely wide. A Location Based Service (LBS) is further a hot topic, and the positioning function and the assisted positioning function of the mobile broadband device required by the terminal user have become a standard configuration of the type of device. The existing positioning function and assisted positioning function are mainly implemented on the basis of Global Positioning System (GPS) and Assisted Global Positioning System (AGPS) techniques, and the assisted positioning function is implemented as follows: a host side (Host) initiates an assisted positioning request to the mobile broadband device; and after receiving the assisted positioning request, the mobile broadband device sends a request for requiring positioning data to a Secure User Plane Location (SUPL) server, and the mobile broadband device performs final positioning in combination with data of a GPS satellite after receiving the positioning data from the SUPL server.

This method has the following disadvantages:
The promise is that the mobile broadband device is network-connected, and an application for continuously positioning and tracking, such as a navigation function, the traffic consumption of the user may be significantly increased, and an existing Wireless Local Area Network (WLAN) cannot be efficiently utilized.

The performance of the mobile broadband device is influenced. In a network in which a multiple Packet Data Protocol (PDP) link is supported by an operator, two PDP links need to be initiated by the mobile broadband device in order to support the assisted positioning function, one PDP link is used for network connecting, and the other PDP link is used for acquiring assisted positioning data. However, due to the limited performance of the processor of the general mobile broadband device, this implementation solution may obviously improve the processing load of the device and increase power consumption, which is a fatal injury for the mobile device.

In a network in which only a single PDP link is supported by an operator, while the mobile broadband device is acquiring the assisted positioning data, a network connection operation cannot be performed and thus the user experience is seriously influenced.

Because of these disadvantages of the existing implementation solution, how to overcome the disadvantages and implement a new technical solution become imperative for the assisted positioning function of the mobile broadband device.

### SUMMARY

The disclosure is intended to overcome the performance problem and bad user experience caused by the positioning completely depending on the mobile broadband itself which exists in the related art, provide a mode in which a software function module is added to a host side (HOST), and complete an assisted positioning function in cooperation with a mobile broadband device, so that the above-mentioned problem is solved and a new assisted positioning function method for the mobile broadband device is implemented.

To this end, the disclosure provides an assisted positioning method for a mobile broadband device. A host initiates a positioning request to the mobile broadband device; a firmware of the mobile broadband device determines whether an assisted positioning function is needed for the positioning request received from the host, when the assisted positioning function is needed, the firmware initiates a request for acquiring assisted positioning data to the host; after receiving the request for acquiring the assisted positioning data from a device side, the host initiates a request for acquiring the assisted positioning data to a Secure User Plane Location (SUPL) server; the SUPL server sends the assisted positioning data to the host; after receiving the assisted positioning data, the host sends the assisted positioning data to the mobile broadband device; and the firmware of the mobile broadband device calculates standard GPS data using the received assisted positioning data, and then outputs the standard GPS data to a positioning application program of the hose side.

Further, after receiving the request for acquiring the assisted positioning data from the host, the SUPL server may acquire the assisted positioning data from a database according to network information of the mobile broadband device, and then send the assisted positioning data to the host.

Further, the positioning request may be initiated to the mobile broadband device by a software component running in the host, and the software component may be an application program, a dynamic linking library, a drive program or a Software Development Kit (SDK).

Further, when the assisted positioning function of the mobile broadband device is not needed to be started, the standard GPS data may be directly returned to the application program of the host.

Further, after receiving the request for acquiring the assisted positioning data from the firmware of the mobile broadband device, the host may initiate a request for acquiring the assisted positioning data of the terminal to the SUPL server, wherein the request for acquiring the assisted positioning data includes a Mobile Country Code (MCC), a Mobile Network Code (MNC), a Location Area Code (LAC) and a Cell Identity (CI) number of the mobile broadband device.

Further, after receiving the request for acquiring the assisted positioning data from the host, the SUPL server may find out the assisted positioning data from a database of the SUPL server according to the MCC, the MNC, the LAC and the CI number included in the request, and then send the assisted positioning data to the host in a User plane Location Protocol (ULP) format.

The disclosure also provides a mobile broadband device, which includes a GPS module and an assisted positioning module, wherein
the GPS module is configured to acquire data from a GPS satellite, calculate standard GPS data using assisted positioning data, and then send the standard GPS data to a host; and
the assisted positioning module is configured to determine whether an assisted positioning function is needed for a positioning request sent by the host, and when the assisted positioning function is needed, initiate a request for acquiring assisted positioning data to the host and receive the assisted positioning data from the host.

Further, the positioning request may be initiated to the mobile broadband device by the host through a software component running in the host, and the software component may be an application program, a dynamic linking library, a drive program or an SDK.

Further, when the assisted positioning function of the mobile broadband device is not needed to be started, the standard GPS data may be directly returned to an application program of the host.

Further, after receiving the request for acquiring the assisted positioning data from the mobile broadband device, the host may initiate a request for acquiring the assisted positioning data of the terminal to the SUPL server, wherein the request for acquiring the assisted positioning data includes an MCC, an MNC, an LAC and a CI number of the mobile broadband device.

To sum up, the following advantages can be acquired by adopting the disclosure.

By means of this new method, the assisted positioning function of the mobile broadband product may have advantages in the following aspects: the user experience is improved: when the assisted positioning function is used, the network connection operation of the mobile broadband device should not be initiated, so that the traffic of a user is saved and benefits of the user using the mobile broadband device are increased; the assisted positioning data are mostly acquired in the host, the load of the mobile broadband product and device side is greatly reduced, the performance index of the mobile broadband product is improved; no matter whether multiple PDP networking is supported by the network of the operator, the assisted positioning function may be used, and thus the application scope of the assisted positioning function of the mobile broadband product is expanded.

Because of the above-mentioned advantages, it can be seen that the disclosure not only processes certain novelty and but also has extremely high practical value, and the usability and stability of the product, and the user experience are greatly improved.

### BRIEF DESCRIPTION OF THE DRAWINGS

Fig. 1 is a diagram showing functional cooperation of all modules of a mobile broadband device according to an embodiment of the disclosure;
Fig. 2 is a flowchart showing a positioning operation mode of a mobile broadband device according to an embodiment of the disclosure.

### DETAILED DESCRIPTION

Before the technical solution of the disclosure is introduced, the terminologies and acronyms involved in the disclosure are explained below:
GPS is the abbreviation of the Global Positioning System. The GPS is developed on the meridian instrument satellite navigation and positioning technique by the US Army in the early 1970s, is a navigation positioning, timing, and speed measurement system which has the advantages of globalization, versatility (for the continent, the ocean, the aviation and the spaceflight) and all-weather operation, and is currently the only system which can be operated normally and provide the navigation positioning service to global users.
SUPL is the abbreviation of the Secure User Plane Location. Currently, in view of the operator, the solution on the basis of the assisted positioning function of the wireless network is mainly divided into two types: one type is the control plane, and the other type is the user plane. An Open Mobile Alliance (OMA), as an international mobile communication organization, formulates an international norm for the SUPL. The SUPL is a protocol which is based on a standard and allows the communication between a mobile phone user and a positioning server, and is supported by the QUALCOMM and leaders of other positioning industries.
AGPS is the abbreviation of the Assisted Global Positioning System.
MCC is the abbreviation of the Mobile Country Code, and the MCC of China is 460.
MNC is the abbreviation of the Mobile Network Code, and the MNC of China Telecom is 03.
LAC is the abbreviation of the Location Area Code.
CI is the abbreviation of the Cell Identity.
PDP is the abbreviation of the Packet Data Protocol.
ULP is the abbreviation of the User plane Location Protocol.
NMEA is the abbreviation of the National Marine Electronics Association. In fact, the NMEA has become a most generally used data output format for all GPS receivers, and at the same time, is also used in a majority of software packages interfacing with the GPS receiver.

The disclosure overcomes the performance problem and bad user experience caused by positioning completely depending on the mobile broadband itself which exists in the related art, provides a mode in which a software function module is added in the host, and completes the assisted positioning function in cooperation with the mobile broadband device, so as to solve the above-mentioned problem and implement a new assisted positioning function method for the mobile broadband device.

The disclosure implements a positioning function module in the mobile broadband device side, and the positioning function module includes a GPS module and an assisted positioning module. At the same time, the disclosure implements an assisted positioning module in the host, and the assisted positioning module includes an assisted positioning data acquiring module and an assisted positioning data issuing module.

The new type of mobile broadband device equipment mentioned in the disclosure includes two function modules, and the function and implementation mode of each module are described as follows.

A main function of the host assisted positioning module of the mobile broadband device is to communicate with a SUPL server through any available network connection of the host, acquire assisted positioning data from the AGPS server of the SUPL server, and then send the acquired assisted positioning data to the mobile broadband device side through the assisted positioning data issuing module.

The device side positioning module of the mobile broadband device is a module for implementing the positioning function in the device side of the mobile broadband device, and the device side positioning module includes a GPS module and an assisted positioning module, and is mainly in charge of acquiring astrology data from a GPS satellite, calculating standard GPS data using data responsible for positioning, and then outputting the standard GPS data to the host.

The disclosure is further elaborated below in combination with the drawings and specific implementation.

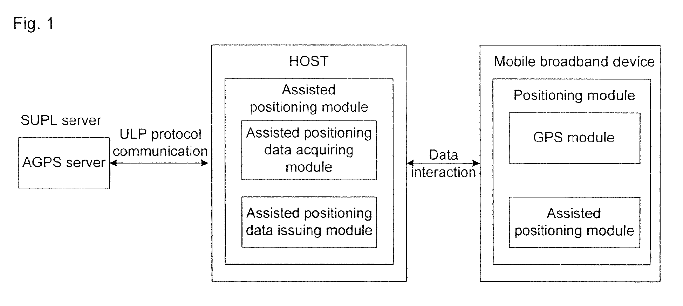

Fig. 1 is a diagram showing functional cooperation of all modules of the mobile broadband device according to an embodiment of the disclosure.

The diagram is mainly composed of three parts: a positioning module in the mobile broadband device, an assisted positioning module of a host and a SUPL server module deployed in a remote end.

The positioning module in the mobile broadband device includes a GPS module and an assisted positioning module, and is mainly in charge of acquiring astrology related data from a GPS satellite, calculating standard GPS data using data responsible for positioning, and then outputting the standard GPS data to the host.

The host assisted positioning module of the mobile broadband device includes an assisted positioning data acquiring module and an assisted positioning data issuing module. The main function of the host assisted positioning module is to communicate with a SUPL server through any available network connection of the host, acquire assisted positioning data from the AGPS server of the SUPL server, and then send the acquired assisted positioning data to the mobile broadband device side through the assisted positioning data issuing module.

The positioning request is generally initiated by an application program of the host, and then the positioning module in the mobile broadband device determines whether the assisted positioning is needed. If the assisted positioning is needed, then the assisted positioning module of the host initiates the communication with the SUPL server, and acquires the assisted positioning data through the ULP. Then, the assisted positioning module of the host sends the assisted positioning data to the positioning module of the mobile broadband device, and the positioning module of the mobile broadband device calculates the standard GPS data and reports the standard GPS data to the host.

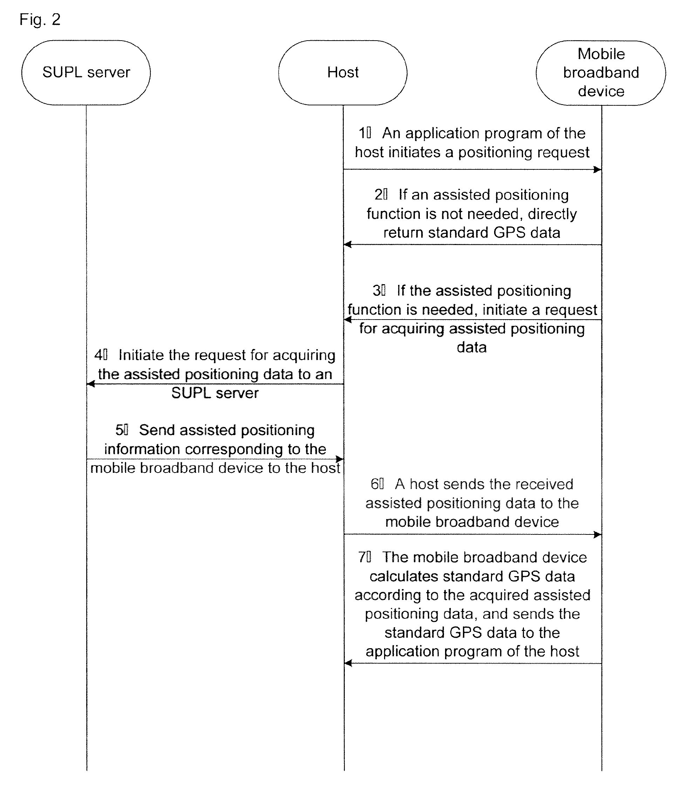

Fig. 2 is a flowchart showing a positioning operation mode of a mobile broadband device according to an embodiment of the disclosure, which includes the following steps:
Step 1: A software component running in a host initiates a positioning request to the mobile broadband device. The positioning request may be transmitted to a firmware of the mobile broadband device. The form of the software component includes but is not limited to an application program, a dynamic linking library, a drive program, and an SDK.
Step 2: A positioning module in the firmware (firmware) of the mobile broadband device determines whether the assisted positioning function of the mobile broadband device is needed to be started for the positioning request. If the assisted positioning function is not needed, then the standard GPS data are directly returned to the application program of the host, and the positioning process is declared to be completed. This positioning mode is a positioning mode purely depending on a GPS satellite.
Step 3: If the assisted positioning function is needed, the mobile broadband device initiates a request for acquiring assisted positioning data to the assisted positioning function module of the host.
   This positioning mode is an assisted positioning mode in combination with data of the GPS satellite by means of the assisted positioning data.
Step 4: After receiving the request for acquiring the assisted positioning data from the mobile broadband device side, the assisted positioning module of the host initiates a request for acquiring the assisted positioning data of this terminal to the SUPL server, and the request may include an MMC, an MNC, an LAC and a CI number of the current mobile broadband device.
Step 5: After receiving the request for acquiring the assisted positioning data from the hose side, the SUPL server finds out, according to network information included in this request such as the MMC, the MNC, the LAC and the CI number, the corresponding assisted positioning data from a database of the SUPL server, and then sends the assisted positioning data to the assisted positioning data acquiring module of the host in a ULP form.
Step 6: After receiving the assisted positioning data from the SUPL server, the host sends the assisted positioning data to the positioning module of the mobile broadband device through a Universal Serial Bus (USB) interface.
Step 7: After receiving the assisted positioning data, the mobile broadband device calculates standard GPS data in combination with the GPS module and the assisted positioning module, and reports the standard GPS data to the application program of the host. So far, the assisted positioning process is declared to be completed.

Of course, the disclosure may also have many kinds of implementation modes. Various corresponding alterations and changes may certainly be made by those skilled in this art according to the disclosure, without departing from the spirit and the essence of the disclosure. However, any modification, equivalent substitution and improvement made within the spirit and the principle of the disclosure should fall within the scope of protection of the claims of the disclosure.

## Claims

1. An assisted positioning method for a mobile broadband device, comprising:
initiating, by a host, a positioning request to the mobile broadband device;
determining, by a firmware of the mobile broadband device, whether an assisted positioning function is needed for the positioning request received from the host, when the assisted positioning function is needed, initiating, by the firmware, a request for acquiring assisted positioning data to the host;
after receiving the request for acquiring the assisted positioning data from the firmware, initiating, by the host, a request for acquiring the assisted positioning data to a Secure User Plane Location (SUPL) server;
sending, by the SUPL server, the assisted positioning data to the host;
after receiving the assisted positioning data, sending, by the host, the assisted positioning data to the mobile broadband device; and
calculating, by the firmware of the mobile broadband device, standard Global Positioning System (GPS) data using the received assisted positioning data, and then outputting the standard GPS data to a positioning application program of the hose.

2. The method according to claim 1, wherein after receiving the request for acquiring the assisted positioning data from the host, the SUPL server acquires the assisted positioning data from a database according to network information of the mobile broadband device, and then sends the assisted positioning data to the host.

3. The method according to claim 1, wherein the positioning request is initiated by a software component running in the host, wherein the software component is an application program, a dynamic linking library, a drive program or a Software Development Kit (SDK).

4. The method according to claim 1, further comprising:
when the assisted positioning function of the mobile broadband device is not needed, returning, by the firmware of the mobile broadband device, the standard GPS data provided by the mobile broadband device to the application program of the host.

5. The method according to claim 1, wherein the request for acquiring the assisted positioning data initiated by the host comprises a Mobile Country Code (MCC), a Mobile Network Code (MNC), a Location Area Code (LAC) and a Cell Identity (CI) number of the mobile broadband device.

6. The method according to claim 5, wherein after receiving the request for acquiring the assisted positioning data from the host, the SUPL server finds out the assisted positioning data from a database of the SUPL server according to the MCC, the MNC, the LAC and the CI number comprised in the request, and then sends the assisted positioning data to the host in a User plane Location Protocol (ULP) format.

7. A mobile broadband device, comprising a Global Positioning System (GPS) module and an assisted positioning module, wherein
the GPS module is configured to acquire data from a GPS satellite, calculate standard GPS data using assisted positioning data, and send then the standard GPS data to a host; and
the assisted positioning module is configured to determine whether an assisted positioning function is needed for a positioning request sent by the host, and when the assisted positioning function is needed, initiate a request for acquiring assisted positioning data to the host and receive the assisted positioning data from the host.

8. The device according to claim 7, wherein the positioning request is initiated to the mobile broadband device by the host through a software component running in the host, wherein the software component is an application program, a dynamic linking library, a drive program or a Software Development Kit (SDK).

9. The device according to claim 7, wherein when the assisted positioning function of the mobile broadband device is not needed to be started, the standard GPS data are directly returned to an application program of the host.

10. The device according to claim 7, wherein after receiving the request for acquiring the assisted positioning data from the mobile broadband device, the host initiates a request for acquiring the assisted positioning data to the SUPL server, wherein the request for acquiring the assisted positioning data includes a Mobile Country Code (MCC), a Mobile Network Code (MNC), a Location Area Code (LAC) and a Cell Identity (CI) number of the mobile broadband device.
